# EUROPEAN PATENT APPLICATION

(11) **EP 4 718 337 A1**
(43) Date of publication of application: **01.04.2026**
(21) Application number: 24810122.2
(22) Date of filing: 19.04.2024
(51) Int. Cl.: G06N 5/04, G06F 16/2455, G06F 16/28

(54) **INFERENCE ACCELERATION METHOD, DEVICE, AND STORAGE MEDIUM**

(30) Priority: 23.05.2023 CN 202310596293
(71) Applicant: Cloud Intelligence Assets Holding (Singapore) Private Limited, Singapore 189554 (SG)
(72) Inventor: ZHAO, Dachuan, Beijing 100102 (CN); YOU, Liang, Beijing 100102 (CN)
(74) Representative: Novagraaf Technologies
(86) International application number: PCT/CN2024/088915
(87) International publication number: WO 2024/239875

(57) **Abstract**

Embodiments of the present disclosure provide an inference acceleration method, a device, and a storage medium. Multiple size intervals are configured for an inference model in advance, and adapted acceleration operators are respectively selected for size interval in advance. Based on this, during execution of the inference model, a target input size corresponding to a target inference operation during a current round of inference is determined, a target size interval including the target input size is found from the multiple size intervals configured for the inference model, and an acceleration operator associated with the target size interval is used as a target acceleration operator suitable for the target inference operation during the current round of inference. Therefore, during execution of an inference model, an adapted acceleration operator can be determined only by finding an appropriate size interval for a target inference operation. In this way, when the inference model supports a dynamic input size, adaptive matching of acceleration operators can be efficiently and accurately implemented, thereby improving inference acceleration performance.

## Description

The present disclosure claims priority of Chinese Patent Application No. 202310596293.3, filed to China National Intellectual Property Administration on May 23, 2023 and titled "INFERENCE ACCELERATION METHOD, DEVICE, AND STORAGE MEDIUM", the content of which is hereby incorporated by reference in its entirety.

### TECHNICAL FIELD

The present disclosure relates to the field of artificial intelligence technologies, and in particular, to an inference acceleration method, a device, and a storage medium.

### BACKGROUND OF THE INVENTION

Currently, during an initialization phase of inference, kernels (kernel functions on a GPU) are typically matched for convolutional layers in an inference model to generate matching results. The matching results are solidified and applied throughout an execution phase of the inference. In other words, during the execution phase of the inference, kernels corresponding to respective convolutional layers are invoked based on the solidified matching results to achieve inference acceleration.

As inference requirements become increasingly diverse, some inference models may support multiple input/input configurations. The foregoing approach of solidifying kernels for convolutional layers can no longer meet dynamic acceleration requirements of inference models, leading to unstable inference acceleration performance.

### SUMMARY OF THE INVENTION

Multiple aspects of the present disclosure provide an inference acceleration method, a device, and a storage medium, to improve inference acceleration performance.

Embodiments of the present disclosure provide an inference acceleration method, including the following steps. A target input size corresponding to a target inference operation during a current round of inference is determined in response to an inference instruction during execution of an inference model, input sizes corresponding to the target inference operation in different inference processes being not completely identical. A target size interval including the target input size is searched from multiple size intervals configured for the inference model.

An acceleration operator associated with the target size interval is selected as a target acceleration operator corresponding to the target inference operation during the current round of inference to accelerate the target inference operation, where the target inference operation is any inference operation to be accelerated included in the inference model.

Embodiments of the present disclosure further provide a computing device, including a memory, a processor, and a communication component. The memory is configured to store at least one computer instruction. The processor is coupled with the memory and the communication component, and is configured to execute the at least one computer instruction to perform the foregoing inference acceleration method.

Embodiments of the present disclosure further provide a computer-readable storage medium storing computer instructions, the computer instructions, when executed by at least one processor, causing the at least one processor to perform the foregoing inference acceleration method.

### BRIEF DESCRIPTION OF DRAWINGS

In the accompanying drawings, unless otherwise specified, identical or similar components or elements are represented by a like numeral throughout several figures. These accompanying drawings are not necessarily drawn to scale. It is understood that these accompanying drawings depict several implementations disclosed in accordance with the present disclosure and are not to be considered limiting of the scope of the present disclosure.

The accompanying drawings described herein are used for providing a further understanding of the present disclosure, and constitute a part of the present disclosure. The schematic embodiments of the present disclosure and the description thereof are used for describing the present disclosure and do not constitute an inappropriate limitation to the present disclosure. In the accompanying drawings:
FIG. 1 is a schematic flowchart of an inference acceleration method according to some exemplary embodiments of the present disclosure.
FIG. 2 is a logical schematic diagram of an inference acceleration method according to some exemplary embodiments of the present disclosure.
FIG. 3 is a structural schematic diagram of a computing device according to some exemplary embodiments of the present disclosure.

### DETAILED DESCRIPTION OF THE INVENTION

To make the objectives, technical solutions, and advantages of the present disclosure clearer, the following clearly and completely describes the technical solutions of the present disclosure with reference to specific embodiments of the present disclosure and the corresponding accompanying drawings. Apparently, the described embodiments are some rather than all of the embodiments of the present disclosure. All other embodiments obtained by a person having ordinary skill in the art based on embodiments of the present disclosure without creative efforts shall fall within the scope of protection of the present disclosure.

Inference is a process of making predictions using a trained model. A model used for inference is described as an inference model herein. The inference model is a neural network model, a machine learning model, or the like. With the continuous evolution of inference requirements, the scale and complexity of inference models have also been increasing. To ensure inference efficiency, inference acceleration techniques have emerged. However, at present, inference acceleration performance remains unstable. For this, in some embodiments of the present disclosure, multiple size intervals are configured for the inference model in advance, and adapted acceleration operators are respectively selected for a model having multiple sizes in advance. Based on this, during execution of the inference model, a target input size corresponding to a target inference operation during a current round of inference is determined in response to an inference instruction, a target size interval including the target input size is searched from the multiple size intervals configured for the inference model, and an acceleration operator associated with the target size interval is selected as a target acceleration operator suitable for the target inference operation during the current round of inference. Therefore, the multiple size intervals and the acceleration operators associated with the size intervals are configured for the inference model in advance, and during the execution of the inference model, the adapted acceleration operator is determined through searching for an appropriate size interval for the target inference operation. In this way, when the inference model supports a dynamic input size, adaptive matching of acceleration operators can be efficiently and accurately implemented, so that inference acceleration performance in each round of inference can be ensured.

The technical solutions provided in the embodiments of the present disclosure are described below in detail with reference to the accompanying drawings.

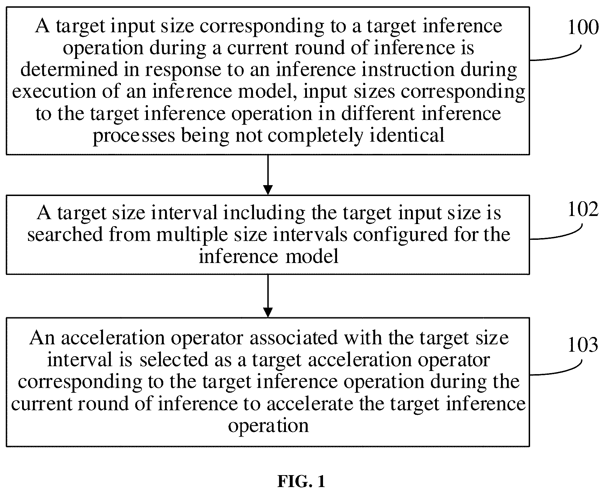

FIG. 1 is a schematic flowchart of an inference acceleration method according to some exemplary embodiments of the present disclosure. The inference acceleration method is performed by an inference acceleration engine. The inference acceleration engine is implemented as software, hardware, or a combination of software and hardware. The inference acceleration engine is integrated in a computing device. Referring to FIG. 1, the inference acceleration method includes the following steps. In step 100, a target input size corresponding to a target inference operation during a current round of inference is determined in response to an inference instruction during execution of an inference model, input sizes corresponding to the target inference operation in different inference processes being not completely identical. In step 101, a target size interval including the target input size is searched from multiple size intervals configured for the inference model. In step 102, an acceleration operator associated with the target size interval is selected as a target acceleration operator corresponding to the target inference operation during the current round of inference to accelerate the target inference operation, where the target inference operation is any inference operation to be accelerated included in the inference model.

The inference acceleration method provided in some embodiments is applied to various scenarios in which inference acceleration needs to be performed, for example, an image processing scenario or another artificial intelligence inference scenario. An application scenario is not limited in some embodiments. In different application scenarios, an inference function carried by the inference model is deployed as required. For example, in the image processing scenario, the inference function carried by the inference model is a target detection function, an image segmentation function, or the like.

The inference acceleration method provided in some embodiments is set as an innovative function in the inference acceleration engine. However, a deployment location of the inference acceleration engine is not limited in some embodiments. The inference acceleration engine is deployed on a cloud server, or certainly is deployed in another location having an inference acceleration requirement, for example, an enterprise computer room. Currently, the inference acceleration engine may optimize, based on an Infrastructure as a Service (Infrastructure as a Service, IaaS) resource, inference models built by various AI mainstream computing frameworks, which can significantly improve inference performance. The essence of the inference acceleration is heterogeneous acceleration, which is understood as that inference work is handed over to a hardware resource (which may also be referred to as a heterogeneous acceleration period) used for inference acceleration for execution, and is no longer performed by a CPU. This is because such a hardware resource, compared with the CPU, has hardware and software attributes more suitable for performing inference work. In some embodiments, the hardware resource used for inference acceleration may include, but is not limited to, a graphics processing unit (Graphics Processing Unit, GPU), or a neural-network processing unit (Neural-network Processing Unit, NPU), which is not limited in some embodiments.

In some embodiments, a computational operation on each network layer during the execution of the inference model is described as an inference operation. The network layer includes, but is not limited to, a convolutional layer, and a pooling layer. The essence of the inference model is a neural network model, and the basic knowledge of the neural network model is not further described herein. It should be noted that the embodiments mainly focus on inference operations to be accelerated in the inference model, that is, those inference operations that need to be performed on the hardware resource used for inference acceleration.

In some embodiments, a function executed on a hardware resource used for inference acceleration is described as an acceleration operator. For example, for the GPU, a function executed on the GPU is a kernel function (kernel). In this way, a typical implementation form of the acceleration operator in some embodiments is a kernel. Certainly, the acceleration operator in some embodiments may alternatively use an implementation form suitable for another type of hardware resource, and is not limited thereto.

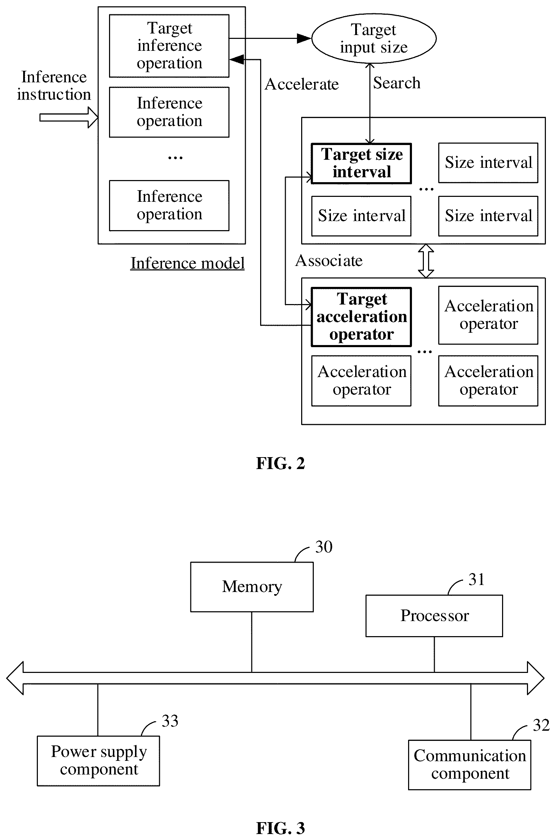

FIG. 2 is a logical schematic diagram of an inference acceleration method according to some exemplary embodiments of the present disclosure. Referring to FIG. 2, in some embodiments, multiple different acceleration operators are provided. The acceleration operators implement inference operations in an inference model on a hardware resource used for inference acceleration to accelerate the inference operations. It should be understood that such acceleration is relative to a speed at which the inference operation is executed on a CPU. That is, a speed at which the inference operation is executed on the hardware resource used for inference acceleration is higher than the speed at which the inference operation is executed on the CPU.

In some embodiments, acceleration strategies in different acceleration operators are different. Therefore, the different acceleration operators can achieve better acceleration performance for user requirements to which the acceleration operators are adapted. Therefore, some embodiments provides a brand new technical concept of matching an acceleration operator for each inference operation.

Referring to FIG. 1, in step 100, the target input size corresponding to the target inference operation during the current round of inference is determined in response to the inference instruction during the execution of the inference model. The input size is used for representing size information of input data that needs to be processed by the inference operation. During actual application, the inference instruction includes an overall input size for the inference model, and an input size corresponding to each inference operation in the inference model during the current round of inference is determined based on the overall input size. Related logic for determining an input size for each inference operation is preset in the inference model. That is, the inference model determines the input size corresponding to each inference operation included in the inference model during the current round of inference. In this case, in step 100, the target input size corresponding to the target inference operation during the current round of inference is obtained from the inference model. Certainly, in some other possible designs, related logic of determining the input size for each inference operation is alternatively implemented by using the inference acceleration method provided in some embodiments, to obtain the target input size corresponding to the target inference operation during the current round of inference. This is not limited in some embodiments.

During the execution of the inference model, multiple inference instructions are received, a single inference instruction triggers one round of inference, and in the round of inference, and all inference operations included in the inference model are triggered to be executed. For ease of description of the technical solution, in some embodiments, starting from step 100, the inference acceleration solution is described by using the target inference operation in the inference model as an example. The target inference operation is any inference operation to be accelerated included in the inference model. In addition, it should be understood that other inference operations to be accelerated in the inference model may alternatively implement inference acceleration according to the same inference acceleration logic, thereby ensuring acceleration performance during the current round of inference.

In some embodiments, it is innovatively provided that during the execution of the inference model, that is, in an execution phase of inference, in response to the inference instructions, an input size, in the current round of inference, corresponding to each inference operation to be accelerated in the inference model is determined. It is understood that the input size corresponding to each inference operation included in the inference model is affected by the overall input size specified for the inference instruction. Therefore, when the inference model supports a dynamic input size, input sizes corresponding to the target inference operation in different inference processes are not completely identical. That is, the target input size corresponding to the target inference operation may dynamically change.

For example, when an inference function of the inference model is a target detection function, the inference instruction includes three images. Each image has a height of 30 and a width of 20. A next inference instruction includes two images. Each image has a height of 40 and a width of 30. Clearly, overall input sizes of the two inference instructions are totally different. Consequently, input sizes corresponding to the target inference operation in the two rounds of inference are also different.

In some embodiments, each input size is calculated as a product of a number of samples, an input height of each sample, and an input width of each sample. Certainly, the embodiments are not limited thereto, and another manner may alternatively be used for representing the input size. For the inference operation, the sample is understood as a feature representation embedding suitable for the inference operation in a round of inference task.

As mentioned above, the different acceleration operators can achieve better acceleration performance for user requirements for which the acceleration operators are suitable. Therefore, an acceleration operator suitable for the target input size corresponding to the target inference operation during the current round of inference can be searched for the target inference operation, thereby ensuring the inference acceleration performance for the target inference operation.

Therefore, in some embodiments, before the execution of the inference model, an acceleration operator suitable for each of multiple size intervals corresponding to the inference model is respectively searched for. That is, pre-configuration of acceleration operators is completed in an initialization phase of inference. It should be understood that the multiple size intervals configured for the inference model in some embodiments may cover various input size cases required by the inference operations included in the inference model. In other words, any input size corresponding to each inference operation in the inference model during each round of inference may fall within a certain size interval configured for the inference model. The technical details related to the pre-configuration are described in detail below.

Based on this, referring to FIG. 1 and FIG. 2, in step 101, the multiple size intervals configured for the inference model are searched for the target size interval including the target input size. For example, in response to the target input size corresponding to the target inference operation during the current round of inference being 900, and the multiple size intervals configured for the inference model being [1, 32], [33, 64], ..., [897, 928], ..., and the like, in step 101, the target size interval corresponding to the target inference operation is searched in [897, 928].

As mentioned above, in some embodiments, acceleration operators have been respectively suitable for multiple size intervals corresponding to the inference model in advance. Based on this, referring to FIG. 1, in step 102, the acceleration operator associated with the target size interval is set as the target acceleration operator corresponding to the target inference operation during the current round of inference to accelerate the target inference operation. In this way, in each round of inference, each inference operation to be accelerated can obtain appropriate acceleration, thereby ensuring the stability of inference acceleration performance.

It should be noted that the inference acceleration method provided in some embodiments is an innovative function in the inference acceleration engine. The innovative function may complement and synergize with other functions in the inference acceleration engine. For example, the inference acceleration engine may fuse inference operations to be accelerated, and set the fused inference operation as the target inference operation in some embodiments, thereby reducing the number of invocations for acceleration operators. The other acceleration function in the inference acceleration engine is not limited in some embodiments.

In summary, in some embodiments, multiple size intervals are configured for the inference model in advance, and acceleration operators are respectively selected for the inference model having multiple sizes in advance. Based on this, during the execution of the inference model, the target input size corresponding to the target inference operation during the current round of inference is determined in response to the inference instruction, the target size interval including the target input size is searched from the multiple size intervals configured for the inference model, and the acceleration operator associated with the target size interval is set as the target acceleration operator suitable for the target inference operation during the current round of inference. Therefore, the multiple size intervals and the acceleration operators associated with the size intervals are configured for the inference model in advance, and during the execution of the inference model, the acceleration operator is determined through searching for an appropriate size interval for the target inference operation. In this way, when the inference model supports a dynamic input size, suitable matching of acceleration operators can be efficiently and accurately implemented, so that inference acceleration performance in each round of inference can be ensured.

In the foregoing or following embodiments, before the execution of the inference model, an acceleration operator suitable for each of multiple size intervals corresponding to the inference model is respectively searched for and the mapping relationship between the multiple size intervals and the acceleration operators is constructed.

During actual application, the mapping relationship between the multiple size intervals and the acceleration operators constructed for the inference model is stored in a database for use.

In some possible implementations, the mapping relationship is invoked from the database during the execution of the inference model, to serve as a basis for adaptively selecting the acceleration operator for the target inference operation.

In some other possible implementations, the mapping relationship between the multiple size intervals and the acceleration operators is read from the database before the execution of the inference model. The inference configuration file corresponding to the inference model is generated based on the mapping relationship between the multiple size intervals and the acceleration operators, to use the mapping relationship between the multiple size intervals and the acceleration operators based on the inference configuration file during the execution of the inference model. That is, a process of pre-configuring the multiple size intervals and the acceleration operators is completed in the initialization phase of inference. The pre-configuration process is set as a link of generating the inference configuration file in the initialization phase of inference. The inference configuration file is one data object used for recording various parameters related to the inference model, and a matching result of each acceleration operator is recorded in the data object. As described in the background, currently, acceleration operators selected for convolutional layers in the inference model are solidified in the inference configuration file. In this way, in the execution phase of inference, a fixed acceleration operator is used for a single convolutional layer in each round of inference according to a mapping relationship between a convolutional layer and an acceleration operator that is recorded in the inference configuration file. Based on the matching manner of acceleration operators provided in some embodiments, in the foregoing process of generating the inference configuration file, the mapping relationship between the multiple size intervals and the acceleration operators constructed for the inference model is recorded in the inference configuration file. In this way, during the execution of the inference model, the inference acceleration method provided in some embodiments is performed based on the mapping relationship recorded in the inference configuration file. During actual application, during the execution of the inference model, after step 100 in some embodiments, the inference configuration file is read, and the inference configuration file is searched for the size interval in which the target input size corresponding to the target inference operation during the current round of inference is located, and the target acceleration operator associated with the size interval, thereby selecting the appropriate acceleration operator in real time for the target inference operation.

Certainly, in some embodiments, another implementation solution may alternatively be used for storing the mapping relationship between the multiple size intervals and the acceleration operators created for the inference model. This is not limited in some embodiments.

In some embodiments, multiple implementations are used for searching for adapted acceleration operators for the multiple size intervals corresponding to the inference model respectively. An implementation includes the following steps. A representative size is selected from a first size interval. An acceleration operator compatible with the representative size is searched from an acceleration operator library. The searched acceleration operator is determined as the acceleration operator suitable for the first size interval, where the first size interval is any one of the multiple size intervals.

In some exemplary implementations, one representative size is selected from a single size interval. For example, boundary values of the size interval are selected. For example, in response to the size interval being [897, 928], "928" is selected as the representative size. Based on this, the acceleration operator library is searched for an adapted acceleration operator for the representative size, and this acceleration operator is set as the acceleration operator suitable for the size interval.

For a process of searching for the adapted acceleration operator for the representative size, an existing solution of selecting an acceleration operator for a convolutional layer during the initialization phase of inference is adopted. It should be understood that the existing solution of selecting the acceleration operator is essentially a static selection solution, and in some embodiments, the process of searching for the adapted acceleration operator for the representative size is further considered as a static selection solution. The static selection solution is not described in detail herein. An existing static selection solution or a static selection solution that may appear in the future is applicable to a process of searching for the adapted acceleration operator for the representative size in some embodiments.

In addition, it should be noted that one same acceleration operator is usually suitable for sizes within one size interval. During actual application, the configuration of each size interval is adjusted to ensure that a sufficient acceleration effect can be obtained for the sizes within the size interval by using the same acceleration operator. When an acceleration operator selected for the size interval cannot ensure that some sizes achieve a sufficient acceleration effect due to an excessively large configuration of the size interval, the configuration of the size interval is decreased. In this way, for a single size interval, an adapted acceleration operator can be determined by executing static selection logic once, which is efficient and accurate.

Certainly, in some embodiments, other implementations may alternatively be used for searching for adapted acceleration operators for the multiple size intervals corresponding to the inference model respectively. For example, for a single size interval, static selection logic is separately executed for each size within the size interval, and then an acceleration operator with the maximum number of times of selection within the size interval or an acceleration operator with the highest acceleration performance index in a single size is determined as the acceleration operator suitable for the size interval. Some embodiments is not limited thereto.

In addition, in some embodiments, multiple implementations may alternatively be used for configuring the multiple size intervals for the inference model. In some implementations, an input size requirement range corresponding to the inference model is determined before the execution of the inference model. The input size requirement range is divided into the multiple size intervals.

In some implementations, a source of the input size requirement range corresponding to the inference model is not limited. During actual application, the input size requirement range corresponding to the inference model is directly specified by a user. Alternatively, the input size requirement range corresponding to the inference model is determined according to an upper size limit that can be provided by a hardware resource used by the inference model. For example, when the hardware resource used by the inference model is a GPU, the input size requirement range corresponding to the inference model is determined based on an upper size limit that can be supported by a video memory of the GPU.

After the input size requirement range corresponding to the inference model is determined, the input size requirement range is divided into the multiple size intervals. An exemplary division solution is dividing the input size requirement range into the multiple size intervals according to a specified step size. For example, in response to the specified step size being 32 and the input size requirement range being [1, 1024], the size intervals obtained through division include: [1, 32], [33, 64], ..., [897, 928], .... It can be known that step sizes of the size intervals are all 32. Certainly, this division solution is taken as an example, and some embodiments are not limited thereto. Another division solution is alternatively used for dividing the inference model to obtain multiple sizes, for example, the inference model is divided based on interval boundary values manually input by a user. This is not enumerated herein.

In addition, during the division of the size intervals, some embodiments further provide the following steps. In response to the inference model supporting multiple input channel counts and/or multiple output channel counts, the multiple input channel counts and the multiple output channel counts that are supported by the inference model are combined to generate multiple combination results. The input size requirement range is respectively divided into the multiple size intervals under the multiple combination results to respectively generate the multiple size intervals under the multiple combination results corresponding to the inference model. The input channel and the input channel are both common concepts in neural network models, and are not described in detail herein. In some embodiments, the multiple combination results between the input channel count and the input channel count are provided as indexes, and an operation of dividing the input size requirement range into the multiple size intervals is separately performed under each index. The foregoing example in which the step size of 32 is used for the division of size intervals continues to be used. In response to the input channel count supported by the inference model being 1 or 3 and the output channel count supported by the inference model being 1, two combination results [1, 1] and [3, 1] are generated. Therefore, in some embodiments, the operation of size division is separately performed on the two results. According to this, the multiple size intervals configured for the inference model are as follows:
---[1, 32], [33, 64], ..., [897, 928], ..., under the index of [1, 1]
---[1, 32], [33, 64], ..., [897, 928], ..., under the index of [3, 1]

Correspondingly, in some embodiments, an associated acceleration operator is allocated to each size interval generated under each combination result. It is understood that for one same size interval, acceleration operators suitable for the size interval under different combination results are different. In addition, different division manners may also be used for the division of size intervals under different combination results, and are not limited to the division manner in the foregoing example.

In a process of searching for the target acceleration operator for the target inference operation, an input channel count and an output channel count corresponding to the target inference operation during the current round of inference is determined. The target size interval including the target input size is searched from the multiple size intervals generated under a combination result formed by the input channel count and the input channel count. That is, the input channel count and the output channel count corresponding to the target inference operation during the current round of inference are set as an index, a group of size intervals under the index is searched for, and a target size interval is searched from the group of size intervals.

In addition to the input channel count and the output channel count described above, in some embodiments, another parameter that affects the selection of the acceleration operator may further be introduced as a reference basis for the division of size intervals. The parameter is, for example, at least one model of hardware resources, for inference acceleration, associated with the inference model. Based on this, the multiple input channel counts and the multiple output channel counts that are supported by the inference model, and the at least one model of the associated hardware resource are combined to generate the multiple combination results. That is, other multiple specified parameter combinations related to the selection of the acceleration operator are set as indexes, to guide the division step of size intervals and the step of searching for the acceleration operator for the inference operation.

In summary, in some embodiments, multiple size intervals are configured for the inference model in advance, and the appropriate acceleration operator is selected for each size interval. These preprocessing results are applied to the execution phase of inference, to support the adaptive adjustment of the acceleration operator for each inference operation according to a dynamic acceleration requirement of the inference model in the execution phase of inference, thereby ensuring that each inference operation can obtain a sufficient acceleration effect in each round of inference, and improving the acceleration performance for the inference model.

It should be noted that some procedures described in the foregoing embodiments and the accompanying drawings include multiple operations that appear in a specific sequence. However, it should be clearly understood that these operations are not performed in the sequence in which the operations appear in the present disclosure or are performed in parallel. The sequence numbers of the operations, for example, 101 and 102, are used for distinguishing different operations, and do not indicate any execution sequence. In addition, these procedures may include more or fewer operations, and the operations are performed in sequence or in parallel.

In the embodiments of the present disclosure, multiple size intervals are configured for the inference model in advance, and adapted acceleration operators are respectively selected for the inference model having multiple sizes in advance. Based on this, during the execution of the inference model, the target input size corresponding to the target inference operation during the current round of inference is determined in response to the inference instruction, the target size interval including the target input size is searched from the multiple size intervals configured for the inference model, and the acceleration operator associated with the target size interval is set as a target acceleration operator suitable for the target inference operation during the current round of inference. Therefore, the multiple size intervals and the acceleration operators associated with the size intervals are configured for the inference model in advance, and during the execution of the inference model, the adapted acceleration operator is determined by finding an appropriate size interval for the target inference operation. In this way, when the inference model supports the dynamic input size, adaptive matching of acceleration operators can be efficiently and accurately implemented, thereby improving inference acceleration performance.

FIG. 3 is a structural schematic diagram of a computing device according to some exemplary embodiments of the present disclosure. As shown in FIG. 3, the computing device includes a memory 30, a processor 31, and a communication component 32.

The processor 31 is coupled with the memory 30, and is configured to execute a computer program in the memory 30 to: determine a target input size corresponding to a target inference operation during a current round of inference in response to an inference instruction during execution of an inference model, input sizes corresponding to the target inference operation in different inference processes being not completely identical; search, from multiple size intervals configured for the inference model, for a target size interval including the target input size; and select an acceleration operator associated with the target size interval as a target acceleration operator corresponding to the target inference operation during the current round of inference to accelerate the target inference operation, where the target inference operation is any inference operation to be accelerated included in the inference model.

In some embodiments, the processor 31 is further configured to: respectively search for an acceleration operator suitable for each of multiple size intervals corresponding to the inference model before the execution of the inference model; and construct a mapping relationship between the multiple size intervals and the acceleration operators.

In some embodiments, when searching for the acceleration operators for the multiple size intervals corresponding to the inference model respectively, the processor 31 is further configured to: select a representative size from a first size interval; and search, from an acceleration operator library, for an acceleration operator compatible with the representative size, and determine the searched acceleration operator as the acceleration operator suitable for the first size interval, where the first size interval is any one of the multiple size intervals.

In some embodiments, the processor 31 is further configured to: determine an input size requirement range corresponding to the inference model before the execution of the inference model; and divide the input size requirement range into the multiple size intervals.

In some embodiments, when dividing the input size requirement range into the multiple size intervals, the processor 31 is configured to: combine, in response to the inference model supporting multiple input channel counts and/or multiple output channel counts, the multiple input channel counts and the multiple output channel counts that are supported by the inference model to generate multiple combination results; and respectively divide the input size requirement range into the multiple size intervals under the multiple combination results to respectively generate the multiple size intervals under the multiple combination results corresponding to the inference model.

In some embodiments, when searching, from the multiple size intervals configured for the inference model, for the target size interval including the target input size, the processor 31 is configured to: determine an input channel count and an input channel count corresponding to the target inference operation during the current round of inference; and search, from the multiple size intervals generated under a combination results formed by the input channel count and the input channel count, for the target size interval including the target input size.

In some embodiments, when combining the multiple input channel counts and the multiple output channel counts that are supported by the inference model to generate the multiple combination results, the processor 31 is configured to: determine at least one model of hardware resources, for inference acceleration, associated with the inference model; and combine the multiple input channel counts and the multiple output channel counts that are supported by the inference model, and the at least one model of the associated hardware resource to generate the multiple combination results.

In some embodiments, the mapping relationship between the multiple size intervals and the acceleration operators is stored in a database, and the processor 31 is further configured to: read the mapping relationship between the multiple size intervals and the acceleration operators from the database before the execution of the inference model; and generate an inference configuration file corresponding to the inference model based on the mapping relationship between the multiple size intervals and the acceleration operators, to use the mapping relationship between the multiple size intervals and the acceleration operators based on the inference configuration file during the execution of the inference model.

In some embodiments, each input size is calculated as a product of a number of samples, an input height of each sample, and an input width of each sample.

For example, as shown in FIG. 3, the computing device further includes: other components such as a power supply component 33. Some components are schematically provided in FIG. 3. It does not mean that the computing device includes only the components shown in FIG. 3.

It should be noted that for technical details of the foregoing embodiments of the computing device, refer to related description in the foregoing method embodiments. To reduce space, details are not described herein again, but this should not cause a loss to the scope of protection of the present disclosure.

Correspondingly, embodiments of the present disclosure further provide a computer-readable storage medium storing a computer program. When the computer program is executed, a computing device is caused to implement steps in the foregoing method embodiments.

The memory in FIG. 3 is configured to store a computer program, and is configured to store various other data to support operations on a computing platform. Examples of such data include instructions for any applications or methods operated on the computing platform, contact data, phonebook data, messages, images, video, etc. The memory is implemented using any type of transitory or non-transitory memory devices, or a combination thereof, for example, a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic disk, or an optical disc.

The communication component in FIG. 3 is configured to facilitate communication in a wired or wireless manner between a device in which the communication component is located and another device. The device in which the communication component is located may access a wireless network based on a communication standard, for example, a Wi-Fi network, a 2G network, a 3G network, a 4G/LTE network, a 5G network, or another mobile communication network, or a combination thereof. In some exemplary embodiments, the communication component receives a broadcast signal or broadcast related information from an external broadcast management system through a broadcast channel. In some exemplary embodiments, the communication component further includes a near field communication (NFC) module, to promote short range communication. For example, the NFC module is implemented based on a radio frequency identification (RFID) technology, an infrared data association (IrDA) technology, an ultra-wideband (UWB) technology, a Bluetooth (BT) technology, and other technologies.

The power supply component in FIG. 3 provides power to various components of a device in which the power supply component is located. The power supply component includes a power management system, at least one power source, and any other components associated with the generation, management, and distribution of power in the device in which the power supply component is located.

A person having ordinary skill in the art should understand that the embodiments of the present disclosure are provided as a method, a system, or a computer program product. Therefore, the present disclosure may use a form of a hardware-only embodiment, a software-only embodiment, or some embodiments with a combination of software and hardware. In addition, the present disclosure may use a form of a computer program product implemented on at least one computer-usable storage media (including, but not limited to, a disk memory, a CD-ROM, an optical memory, and the like) that include computer-usable program code.

The present disclosure is described with reference to the flowcharts and/or block diagrams of the inference acceleration method, the device (system), and the computer program product according to the embodiments of the present disclosure. It should be understood that computer program instructions are used for implementing each process and/or each block in the flowcharts and/or the block diagrams and a combination of a process and/or a block in the flowcharts and/or the block diagrams. The computer program instructions are provided for a general-purpose computer, a dedicated computer, an embedded processor, or a processor of another programmable data processing device to generate a machine, so that the instructions executed by the computer or the processor of the another programmable data processing device generate an apparatus for implementing a specific function in at least one procedure in the flowcharts and/or in at least one block in the block diagrams.

These computer program instructions are stored in a computer-readable memory that can instruct the computer or any other programmable data processing device to work in a specific manner, so that the instructions stored in the computer-readable memory generate an artifact that includes instructions apparatus. The instruction apparatus implements a specific function in at least one process in the flowcharts and/or in at least one block in the block diagrams.

The computer program instructions may alternatively be loaded onto a computer or another programmable data processing device, so that a series of operations and steps are performed on the computer or another programmable device, to generate computer-implemented processing. Therefore, the instructions executed on the computer or another programmable device provide steps for implementing a specific function in at least one procedure in the flowcharts and/or in at least one block in the block diagrams.

It should be further noted that the terms "include", "comprise", or any variation thereof are intended to cover a non-exclusive inclusion. Therefore, in the context of a process, a method, a commodity, or a device that includes a series of elements, the process, method, object or device not only includes such elements, but also includes other elements not specified expressly, or may include inherent elements of the process, method, commodity, or device. If no more limitations are made, an element limited by "include one ..." does not exclude other same elements existing in the process, the method, the commodity, or the device which includes the element.

It should be noted that all user information (including, but not limited to, user equipment information, and user personal information) and data (including, but not limited to, data for analysis, stored data, and displayed data) in the present disclosure are information and data that are authorized by users or fully authorized by all parties. The collection, use, and processing of related data must comply with applicable laws, regulations, and standards in relevant countries and regions, and corresponding operational entries are provided for users to choose whether to grant or deny authorization.

The foregoing descriptions are embodiments of the present disclosure and are not intended to limit the present disclosure. A person having ordinary skill in the art may make various modifications and variations to the present disclosure. Any modification, equivalent replacement, or improvement made within the spirit and scope of the present disclosure shall fall within the scope of protection of the present disclosure.

## Claims

1. An inference acceleration method, comprising:
determining a target input size corresponding to a target inference operation during a current round of inference in response to an inference instruction during execution of an inference model, input sizes corresponding to the target inference operation in different inference processes being not completely identical;
searching, from a plurality of size intervals configured for the inference model, for a target size interval comprising the target input size; and
selecting an acceleration operator associated with the target size interval as a target acceleration operator corresponding to the target inference operation during the current round of inference to accelerate the target inference operation;
wherein the target inference operation is any inference operation to be accelerated contained in the inference model.

2. The inference acceleration method according to claim 1, further comprising:
before the execution of the inference model, respectively searching for an acceleration operator suitable for each of a plurality of size intervals corresponding to the inference model; and
constructing a mapping relationship between the plurality of size intervals and acceleration operators based on the acceleration operators respectively suitable for the plurality of size intervals.

3. The inference acceleration method according to claim 2, wherein respectively searching for the acceleration operator suitable for each of the plurality of dimension intervals corresponding to the inference model comprises:
selecting a representative size from a first size interval; and
searching, from an acceleration operator library, for an acceleration operator compatible with the representative size, and determining the searched acceleration operator as the acceleration operator suitable for the first size interval;
wherein the first size interval is any one of the plurality of size intervals.

4. The inference acceleration method according to claim 1, further comprising:
determining an input size requirement range corresponding to the inference model before the execution of the inference model; and
dividing the input size requirement range into the plurality of size intervals.

5. The inference acceleration method according to claim 4, wherein dividing the input size requirement range into the plurality of size intervals comprises:
combining, in response to the inference model supporting a plurality of input channel counts and/or a plurality of output channel counts, the plurality of input channel counts and the plurality of output channel counts that are supported by the inference model to generate a plurality of combination results; and
respectively dividing the input size requirement range into the plurality of size intervals under the plurality of combination results to respectively generate the plurality of size intervals under the plurality of combination results corresponding to the inference model.

6. The inference acceleration method according to claim 5, wherein searching, from the plurality of size intervals configured for the inference model, for the target size interval containing the target input size comprises:
determining an input channel count and an input channel count corresponding to the target inference operation during the current round of inference; and
searching, from the plurality of size intervals generated under a combination result formed by the input channel count and the output channel count, for the target size interval comprising the target input size.

7. The inference acceleration method according to claim 5, wherein combining the plurality of input channel counts and the plurality of output channel counts that are supported by the inference model to generate the plurality of combination results comprises:
determining at least one model of hardware resources, for inference acceleration, associated with the inference model; and
combining the plurality of input channel counts and the plurality of output channel counts that are supported by the inference model, and the at least one model of the associated hardware resource to generate the plurality of combination results.

8. The inference acceleration method according to claim 2, wherein the mapping relationship between the plurality of size intervals and the acceleration operators is stored in a database, and the inference acceleration method further comprises:
reading the mapping relationship between the plurality of size intervals and the acceleration operators from the database before the execution of the inference model; and
generating an inference configuration file corresponding to the inference model based on the mapping relationship between the plurality of size intervals and the acceleration operators, to use the mapping relationship between the plurality of size intervals and the acceleration operators based on the inference configuration file during the execution of the inference model.

9. The inference acceleration method according to claim 1, wherein each input size is calculated as a product of a number of samples, an input height of each sample, and an input width of each sample.

10. A computing device, comprising a memory, a processor, and a communication component;
the memory, configured to store at least one computer instruction; and
the processor, coupled with the memory and the communication component, and configured to execute the at least one computer instruction to perform the inference acceleration method as claimed in any one of claims 1 to 9.

11. A computer-readable storage medium storing computer instructions, the computer instructions, when executed by at least one processor, causing the at least one processor to perform the inference acceleration method as claimed in any one of claims 1 to 9.
